# EUROPÄISCHE PATENTANMELDUNG

(11) **EP 1 048 332 A1**
(43) Veröffentlichungstag der Anmeldung: **02.11.2000**
(21) Anmeldenummer: 99810355.0
(22) Anmeldetag: 27.04.1999
(51) Int. Cl.: B01D 15/08, G01N 30/34, G01N 1/38, B01J 4/02

(54) **Vorrichtung und Verfahren zum Freisetzen von Reagenzien**

(71) Anmelder: METROHM AG, 9100 Herisau (CH)
(72) Erfinder: Schäfer, Helwig, Dr., 9101 Herisan (CH)
(74) Vertreter: Hepp, Dieter

(57) **Zusammenfassung**

Die Erfindung betrifft ein Reagenz-Freisetzungs-System (1), umfassend ein durch eine Membran (2) getrenntes Akzeptor- (6) und Donatormedium (4), in der die Menge der Substanz, die aus dem Donator- (4) in das Akzeptormedium (6) übergeht, d.h. die Konzentration des Akzeptormediums (6), über ein Absperrorgan (7) geregelt wird, welches in vorbestimmbaren Intervallen zwischen einer weiter geöffneten Offenstellung in eine weniger weit geöffnete Stellung, insbesondere in eine Schliessstellung, umschaltbar ist. Die Membran ist selektiv durchlässig für bestimmte Ionen und Moleküle. Das Verhältnis zwischen der Dauer der Offen- und Schliessstellung ist einstellbar. Das erfindungsgemässe Reagenz-Freisetzungs-System (1) ermöglicht ein weitgehendes Ansteuern und Automatisieren der Konzentration des Akzeptormediums und damit ein Integrieren der Vorrichtung in weitere Anlagen, wie z.B. in Anlagen für die Flüssigkeitschromatographie zur Generierung von Eluenten.

## Beschreibung

Die vorliegende Erfindung betrifft eine Vorrichtung und ein Verfahren zum Freisetzen von Reagenzien, insbesondere zur Generierung von Eluenten für die Flüssigkeitschromatographie, gemäss dem Oberbegriff der unabhängigen Patentansprüche.

Eine der gängigsten Verfahren zur Trennung von Substanzgemischen bzw. zur Reinigung chemischer Rohprodukte nach der Synthese ist die Flüssigkeitschromatographie.

Unter dem Begriff der Flüssigkeitschromatographie sollen alle Verfahren bzw. Vorrichtungen verstanden werden, die die Auftrennung von Substanzgemischen unter Ausnützung physikalischer und chemischer Wechselwirkungen zwischen den Substanzen, einer stationären und einer mobilen Phase bewirken. Gegebenenfalls erfolgt dies unter Hinzuziehen zusätzlicher Kräfte wie elektrische Felder oder Druck. Beispiele für die Flüssigkeitschromatographie sind HPLC, RP-HPLC, Ionenchromatographie, Säulenchromatographie, Gelpermeationschromatographie, Dünnschichtchromatographie, aber auch elektrophoretische Verfahren, wie z.B. die Kapillarelektrophorese.

Das zu trennende Substanzgemisch wird in der Regel auf einen sich in einer Säule oder auf einer Platte befindenden Feststoff (stationäre Phase) z.B. Kieselgel, aufgebracht. Anschliessend wird das Substanzgemisch durch Eluenten (mobile Phase) aufgetrennt und die Substanzen werden - idealerweise individuell - aus der Säule ausgetragen bzw. ausgewaschen. Je stärker dabei die Wechselwirkung zwischen der Substanz und der stationären Phase ist, desto höher muss die Elutionskraft des Eluenten eingestellt werden, um das Auswaschen zu erreichen. Im Gegensatz zur isokratischen Trennung, in der der Eluent über die gesamte Dauer des Chromatogrammes unverändert bleibt, erfordern komplexe, schwierig zu trennende Substanzgemische eine Trennung mittels Gradiententechnik.

Die Eluenten sind in der Regel Lösemittel (für eine oder mehrere Substanzen des aufgetragenen Gemisches), deren Gemische oder deionisiertes Wasser, denen bei Bedarf ein oder mehrere lösliche Substanzen, z.B. Salze in variierenden Konzentrationen, zugesetzt sind. Die Elutionskraft eines Eluenten kann durch zunehmende Salzkonzentration gesteigert werden aber auch ein Übergang von unpolaren zu polareren Lösemitteln bzw. vice versa kann abhängig von der stationären Phase eine Erhöhung der Elutionskraft bewirken. Unter der Gradiententechnik wird die sukzessive Steigerung der Elutionskraft des Eluenten im Verlauf eines Chromatogrammes verstanden.

Besonders bei letzterer Technik muss für die Optimierung der Trennung die optimale Eluentenzusammensetzung in einer Vielzahl von Versuchen ermittelt werden, wobei die Eluentenzusammensetzung und -konzentration von Versuch zu Versuch verändert werden muss.

Die Eluenten werden üblicherweise mittels einer konzentrierten Stammlösung aus Lösemittel und darin gelöstem Stoff hergestellt, die je nach gewünschter Endkonzentration ein- oder mehrmals verdünnt wird. Dabei können Verdünnungsfehler auftreten. Darüberhinaus ist die Herstellung insgesamt ein überaus zeitaufwendiger Prozess, da die Stammlösungen durch Einwiegen der Komponenten hergestellt werden müssen. Sind die nötigen Paramenter ermittelt, so muss der oder die Eluenten im laufenden Betrieb ständig bereitstehen bzw. hergestellt werden. Ein "Leerlaufen" der Säule sollte im laufenden Betrieb vermieden werden. Dies kann besonders an Wochenenden und Feiertagen zu Problemen führen.

Bekannt ist ein Eluentengenerator, der auf dem Prinzip der elektrolytischen Herstellung von Kaliumhydroxidlösung aus einem Kaliumsalz beruht. Die Kaliumhydroxidkonzentration wird durch den Elektrolysestrom geregelt. Mit diesem Generator können jedoch ausschliesslich wässrige Kaliumhydroxidlösungen erzeugt werden.

In der Offenlegungsschrift DE 197 15 322.4 ist eine Anordnung zur Freisetzung von Reagenzien offenbart. Diese dient insbesondere zum Herstellen von Kalibrierlösungen.

In diesen Vorrichtungen, die auch als Reagenz-Freisetzungs-Systeme, kurz RF-Systeme, bezeichnet werden, wird eine Membran auf ihrer ersten Seite mit einem Donatormedium beaufschlagt. Das Donatormedium enthält in der Regel wenigstens ein Lösemittel und wenigstens eine darin gelöste freizusetzende Substanz. Auf der anderen zweiten Membranseite wird ein Akzeptormedium, welches wenigstens ein Lösemittel enthält, vorbeigeführt. Durch die Membran wird die freizusetzende Substanz kontinuierlich aus der Donatorphase in die Akzeptorphase abgegeben.

Der Transport durch die Membran ist ein diffusionskontrollierter Vorgang. Die durch die Membran gelangende Menge an freizusetzender Substanz pro Zeiteinheit (und damit die Konzentration des Akzeptormediums) ist abhängig von der Diffussionsgeschwindigkeit der Substanz durch die Membran, der für den Stoffübergang zur Verfügung stehenden Membranfläche und der Fliessgeschwindigkeit des Akzeptor- und gegebenenfalls des Donatormediums. In DE 197 15 322.4 wird das Donatormedium in einem zur zweiten Membranseite hin offenen, bevorzugt kegelförmigen Behälter aufgenommen, um einen konstanten und reproduzierbaren Stofftransport durch die Membran zu gewährleisten.

In einer weiteren Ausführungsform des RF-Systems in DE 197 15 322.4 ist zwischen der zweiten Membranseite und dem daran vorbeigeführten Akzeptormedium ein Abdeckelement in der Art einer Blende mit unterschiedlichen Lochdurchmessern vorgeschaltet. Die in das Akzeptormedium pro Zeiteinheit gelangende Menge an freizusetzender Substanz soll nun entweder abhängig von der Donatorzusammensetzung unter Konstanthalten der Membran, der Blendenöffnung und der Fliessgeschwindigkeit des Akzeptormediums eingestellt werden. Sie soll aber auch unter Beibehaltung der Donatorzusammensetzung, Membran und Fliessgeschwindigkeit des Akzeptormediums in Abhängigkeit der Grösse der Blendenöffnung variiert werden können. Das Freisetzen der Substanz geschieht kontinuierlich.

Nachteil beider Konzentrationseinstellungen ist die technisch aufwendige und schlecht automatisierbare Ansteuerbarkeit der Blendenöffnung. Im ersten Fall muss zum Herbeiführen von Konzentrationsänderungen das Donatormedium ausgewechselt werden. Dies ist zeitaufwendig und kann zu grossen Mengen an zu entsorgendem Donatormedium führen, insbesondere wenn das Donatormedium instabil ist. Im zweiten Fall muss der Austausch der Abdeckungen zur Änderung der Blendenöffnung entweder manuell erfolgen oder mittels einer technisch aufwendigen Vorrichtung realisiert werden.

Weiterhin wird durch den sich im Totvolumen ausbildenden Flüssigkeitsfilm der Effekt der unterschiedlich grossen Blendenöffnungen nahezu aufgehoben. Als Totvolumen wird der Raum zwischen Absperrvorrichtung, wenn auf der Akzeptorseite angebracht, und der zweiten Membranseite verstanden. Unabhängig von der Grösse der Blendenöffnung ist bei einer solchen Anordnung mit Blende auf der Akzeptorseite immer die gesamte Membranfläche benetzt. Das Totvolumen erstreckt sich entlang der gesamten Membranfläche, wodurch es trotz kleinerer Blendenöffnung zu einem Austausch über die gesamte Membranfläche kommt.

Die Vorrichtungen zur Verstellung der Blendengrösse stellen eine teure, schlecht automatisierbare und störanfällige Grösse dar.

Aufgabe der vorliegenden Erfindung ist die Vermeidung der Nachteile des Standes der Technik. Es sollen insbesondere Reagenz-Freisetzungs-Systeme bereitgestellt werden, mit welchem die Konzentration des Akzeptormediums in einer grossen Bandbreite, schnell, einfach, kostengünstig und geeignet für die Automatisierung einstellbar ist.

Weiterhin ist es eine Aufgabe, RF-Systeme herzustellen, die sich in weitere Anlagen integrieren lassen.

Eine weitere Aufgabe der Erfindung besteht darin, ein Verfahren und eine Vorrichtung zum Generieren von Eluenten für die Flüssigkeitschromatographie zur Verfügung zu stellen. Mit diesen sollen Eluenten nicht nur in variierenden Konzentrationen, sondern auch in unterschiedlichen chemischen Zusammensetzungen, weitgehend automatisierbar hergestellt werden können.

Diese Aufgaben werden gelöst durch das Kennzeichen der unabhängigen Patentansprüche 1, 11 und 15.

Insbesondere wird die Aufgabe gelöst durch eine Vorrichtung, welche eine Membran umfasst, deren erste Seite mit einem Donatormedium, welches wenigstens ein Lösemittel, insbesondere wenigstens ein Lösemittel mit wenigstens einem gelösten Stoff enthält, beaufschlagbar ist. An der anderen, zweiten Membranseite, ist ein Akzeptormedium, welches wenigstens ein Lösemittel enthält, vorbeiführbar.

In einer Ausführungsform der Erfindung befindet sich das Donatormedium in einem zur ersten Membranseite hin offenen, vorzugsweise kegelförmigen Behälter. Wenigstens eine der beiden Membranseiten ist erfindungsgemäss mit einem Absperrorgan versehen, welches die Membranoberfläche wenigstens partiell vom beaufschlagten bzw. vorbeigeführten Medium abtrennt. Ein Mittel zum Bewegen des Absperrorgans betätigt dieses in vorbestimmbaren Intervallen zwischen mindestens einer ersten und mindestens einer zweiten Position.

Die erste und die zweite Position unterscheiden sich ganz allgemein in der Öffnungsbreite des Absperrorgans.

Unter dem Begriff Lösemittel sollen im weitesten Sinne alle Stoffe verstanden werden, die andere Stoffe zur Lösung bringen können. Im engeren Sinne sind darunter organische und anorganische Flüssigkeiten zu verstehen, die andere gasförmige, flüssige oder feste Stoffe zu lösen vermögen.

Besteht das Donatormedium nur aus Lösemittel, so ist - nach Wahl der geeigneten Membran - dies die Substanz, die freigesetzt wird. In der Regel werden jedoch die im Lösemittel gelösten Stoffe, durch selektiv durch die Membran freigesetzt.

In einer bevorzugten Ausführungsform entspricht die erste Position einer geschlossenen Stellung des Absperrorgans, in der der Übergang vom Donator- in das Akzeptormedium vollständig unterbrochen ist. Die zweite Position entspricht einer geöffneten Position. Das Verhältnis der Dauer der Schliessstellung zur Dauer der Offenstellung ist in weiten Bereichen veränderbar. Vorzugsweise ist das Verhältnis in Millisekunden- bis Sekundenbereich einstellbar.

Es können aber auch mehr als nur zwei Positionen einstellbar sein.

Somit ist erfindungsgemäss der Übergang der freizusetzenden Substanz aus dem Donator- in das Akzeptormedium abhängig von der Dauer der weiter geöffneten Offenstellung und der weniger geöffneten Stellung, insbesondere der Schliessstellung des Absperrorgans bzw. dem Verhältnis zueinander.

Das besagte Verhältnis muss dabei derart einstellbar sein, dass, verursacht durch die Diffusionsgeschwindigkeit der freigesetzten Substanz im Akzeptormedium und der Fliessgeschwindigkeit und/oder Turbulenzen des Akzeptormediums, eine homogene Verteilung der freigesetzten Substanz im Akzeptormedium gewährleistet ist. Dies sollte in der Regel spätestens bei Erreichen des Trennsäuleneinlasses eingestellt sein. In einer weiteren Ausführungsform kann zum Erreichen einer homogenen Lösung eine Mischzelle mit einem Volumen von mindestens 0,1 ml und bevorzugt im Bereich von 0,1 bis 5 ml zum Einsatz kommen. Ist keine gleichmässige Verteilung notwendig, können sehr lange Öffnungs- und Schliessdauern eingestellt werden.

Die Art der Konzentrationseinstellung des Akzeptormediums hat mehrere Vorteile: Es sind auf diese Weise mit wenig apparativem und zeitlichem Aufwand Lösungen in einem sehr grossen Konzentrationsbereich auch automatisierbar herstellbar.

So ist beispielsweise bei einer 1 M wässrigen Na₂CO₃ Lösung und einem Akzeptorfluss von 0,8 ml/min, (deionisiertes Wasser) bei geöffneter Einstellung der Absperrvorrichtung und einer Austauschfläche der Membran von 12 mm x 2 mm (Dialyse Membrane Cellu Sep S3, Membrane Filtration Products, Inc. Texas; MWCO: nominal 12000) eine Akzeptorkonzentration von 1,7 mM Na₂CO₃ bei Raumtemperatur einstellbar.

Unter den identischen Bedingungen stellt sich aus einer 1M NaHCO₃ Donatorlösung eine Akzeptorkonzentration von 3,6 mM NaHCO₃ ein und aus einer 1 M NaOH Donatorlösung eine Akzeptorkonzentration von 14 mM NaOH ein.

Weiterhin ist in der Regel nur jeweils eine definierte Offen- bzw. Schliessstellung des Absperrorgans notwendig, was die Störanfälligkeit sowohl des Absperrorgans als auch des Mittels zum Bewegen des Absperrorgans gering hält. Durch die Konzentrationseinstellung über das Verhältnis der Schliess-und Öffnungsdauer des Absperrorgans ist das Mittel zum Bewegen des Absperrorgans, insbesondere in der Ausführungsform von Ventilen, ansteuerbar. Dafür werden in der Regel Computer eingesetzt. Die gewünschte Konzentration muss dann nur noch dem Computer eingegeben werden.

Durch die Computeransteuerbarkeit ist das erfindungsgemässe RF-System problemlos in jede weitere Vorrichtung auch als Bestandteil eines Regelkreises integrierbar.

In einer besonderen Ausführungsform ist das erfindungsgemässe RF-System in Anlagen zur Flüssigkeitschromatographie zur Generierung von Eluenten integrierbar. Dies ermöglicht die Bereitstellung von Eluenten. Ein Wechsel zu höheren oder tieferen Akzeptormediumkonzentrationen ist durch Änderung der Dauer der Offen- bzw. Schliessstellung des Absperrorgans schnell und flexibel, auch innerhalb eines Chromatogramms, realisierbar.

Durch Aneinanderreihen von zwei oder mehr erfindungsgemässen RF-Systemen mit unterschiedlich zusammengesetzten Donatormedien lassen sich sehr komplex aufgebaute Eluenten herstellen. Dies wird insbesondere mit einer unabhängigen Steuerung der Absperrorgane der einzelnen RF-Systeme erreicht. Im Verlaufe eines Flüssigkeitschromatogrammes ist damit auch die Mehrstoff-Gradiententechnik realisierbar.

Als Lösemittel wird oftmals deionisiertes Wasser eingesetzt. Abhängig von der Art der zu eluierenden Substanz sind jedoch auch jedwede andere organische Lösemittel bzw. -gemische, welche gegebenenfalls gelöste Stoffe enthalten, einsetzbar.

Als im Lösemittel des Donatormediums zu lösende Substanzen können alle geeignete Verbindungen, wie z.B. Salze und organische Verbindungen verwendet werden.

Als Mittel zum Bewegen der Absperrorgane sind geeignete Motoren bzw. Magnetschaltungen einsetzbar. Ventile eignen sich besonders für die erfindungsgemässe Vorrichtung, da diese problemlos über Computer ansteuerbar sind.

Als Absperrorgane sind in erster Linie Ventilen geeignet, jedoch nicht ausschliesslich auf diese beschränkt.

In einer besonderen Ausführungsform ist das Absperrorgan in Form zweier Scheiben mit je mindestens einer Durchlassöffnung ausgebildet. Die Scheiben sind derart relativ zueinander verlagerbar, dass die Durchlassöffnung zum Durchlassen der freizusetzenden Substanz wenigstens teilweise fluchten.

Wesentlich ist einerseits die Dichtigkeit des Ventilverschlusses, wenn sich das Absperrorgan in Schliessstellung befindet, und andererseits ein minimales Totvolumen. Da das Totvolumen, wenn das Absperrorgan auf der zweiten Membranseite angeordnet ist, auch bei Schliessstellung des Absperrorgans innerhalb kürzester Zeit die annähernd gleiche Konzentration an freigesetzter Substanz wie im Donatormedium aufweist, führt dieser Effekt, bei nachfolgender Öffnung des Absperrorgans und bei grossem Totvolumen zu erheblichen Konzentrationsschwankungen.

In der Regel sind als Membranen Dialysemembranen einsetzbar, jedoch können auch Filtrationsmembranen mit genügend kleinem Porendurchmesser zum Einsatz kommen. Der Porendurchmesser bzw. das Membranmaterial richtet sich nach den Trennerfordernissen, d.h. der Molekülgrösse und -form der freizusetzenden Reagenzien. Erfindungsgemäss soll nur der freizusetzenden Substanz der Durchtritt durch die Membran möglich sein. Insbesondere soll nur Ionen oder Molekülen nicht jedoch dem Lösemittel der Durchtritt durch die Membran gestattet sein. Unter dem Begriff Ionen oder Moleküle sind jedoch auch durch Lösmittel solvatisierte Ionen oder Moleküle zu verstehen.

Gegenstand der Erfindung ist weiterhin ein Verfahren zum Erzeugen eines Akzeptormediums in einem RF-System, wobei das Akzeptormedium eine vorbestimmbare Menge einer aus dem Donatormedium durch eine Membran freigesetzten Substanz enthält. Die Menge der Substanz wird diskontinuierlich in zeitlich vorbestimmbaren Intervallen zwischen wenigstens einer höheren Menge und wenigstens einer niedrigeren Menge so variiert, dass die der aus im Akzeptormedium resultierenden mittleren Menge der vorbestimmbaren Menge entspricht.

Gegenstand der Erfindung ist weiterhin ein Verfahren zum Freisetzen von Reagenzien mit einem RF-System, umfassend ein durch eine Membran getrenntes Akzeptor- und Donatormedium, wobei
(a) die erste Seite der Membran mit einem Donatormedium beaufschlagt wird, welches wenigstens ein Lösemittel, insbesondere wenigstens ein Lösemittel mit wenigstens einem gelösten Stoff enthält,
(b) an der zweiten Seite der Membran ein Akzeptormedium vorbeigeführt wird, welches wenigstens ein Lösemittel enthält,
(c) wenigstens eine der beiden Membranseiten wenigstens partiell durch ein Absperrorgan von einem der beiden Medien abgetrennt wird
(d) das Absperrorgan in vorbestimmbaren Intervallen von einer weiter geöffneten in eine weniger geöffnete, insbesondere in eine Schliessstellung umgeschaltet wird, um den Austausch zwischen Donator und Akzeptor zeitweise zu reduzieren, insbesondere zu unterbrechen.

Um dem Problem zu begegnen, dass sich die Salzkonzentration im Donatormedium im Laufe der Zeit durch den alleinigen Durchtritt der freizusetzenden Substanz abreichert, wird das Donatormedium erfindungsgemäss eingesetzt als:
- sehr grosses Volumen
- gesättigte Lösung mit Anteilen an ungelöster Substanz (Bodenkörper); Der zu lösende bzw. gelöste Stoff wird dem oder den Lösemitteln im Donatormedium in einer solchen Menge zugesetzt, dass eine nicht gelöste Menge der Substanz als Bodenkörper verbleibt. Da die Löslichkeit von Substanzen in der Regel temperaturabhängig ist, sollte bei grösseren Temperaturschwankungen bevorzugt die Donatorlösung (mit Bodenkörper) auf konstanter Temperatur gehalten werden. Eine Abreichung der zugesetzten zu lösenden bzw. gelösten Substanz würde erst dann stattfinden, wenn der Bodenkörper sich vollständig aufgelöst hat.

Bei einer weiteren Variante wird eine gesättigte Lösung mit Bodenkörper an ungelöster Substanz durch Zugabe von Verdikkungsmitteln wie z.B. Xylose oder Kieselgel in eine Lösung sehr hoher Viskosität überführt. Die Viskosität muss so hoch sein, dass ein Absetzen von ungelöstem Bodenkörper im wesentlichen verhindert wird.

Ausführungsbeispiele der Erfindung werden nachstehend anhand der Zeichnung erläutert. Es zeigen:
- Figur 1: eine schematische Darstellung einer Ausführungsform der erfindungsgemässen Vorrichtung im Längsschnitt,
- Figur 2: die Ausführungsform von Fig.1 mit einer alternativen Absperrvorrichtung,
- Figur 3: eine weitere alternative Ausführungsform der Absperrvorrichtung,
- Figur 4: ein Schema einer Flüssigkeitschromatographieanlage mit einer Ausführungsform des erfindungsgemässen RF-Systems zum automatischen Generieren von Eluenten, das - als Beispiel - drei unterschiedliche Donatormedien enthält,
- Figur 5: in grösserem Massstab einen schematischen Schnitt durch den unteren Teil eines erfindungsgemässen RF-Systems mit einer weiteren alternativen Ausführungsform eines in Schliessstellung befindlichen Absperrorgans,
- Figur 6: einen gleichen Schnitt wie Figur 5 mit in Offenstellung befindlichem Absperrorgan,
- Figur 7: zeigt eine alternative Ausführungsform eines in Offenstellung befindlichen Absperrorgans, und
- Figur 8: zeigt das in Figur 7 gezeigte Absperrorgan in Schliessstellung.

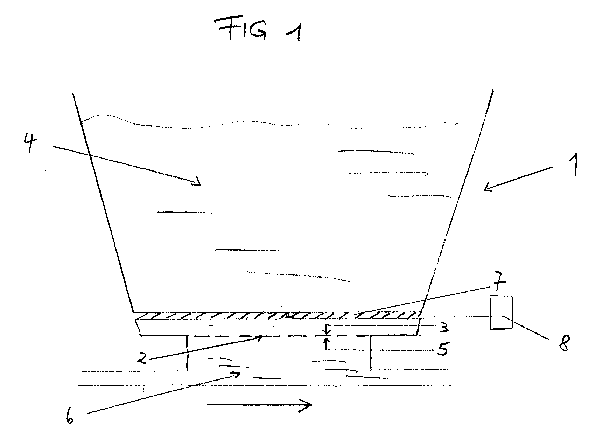

In dem in Figur 1 gezeigten RF-System 1 wird eine Membran 2 auf ihrer ersten Seite 3 mit einem Donatormedium 4 beaufschlagt, welches z.B. aus in Wasser gelöstem Natriumcarbonat (mit Bodenkörper) besteht und damit eine gesättigte Lösung darstellt. Auf der zweiten Membranseite 5 wird das Akzeptormedium 6, welches z.B. aus deionisiertem Wasser besteht, in Pfeilrichtung an der zweiten Membranseite 5 vorbeigeführt. Durch das Konzentrationsgefälle zwischen Donator- 4 und Akzeptormedium 6 kommt es zu einer Diffusion des gelösten Salzes, in diesem Fall der Natrium und Carbonationen in das Akzeptormedium 6. Die Konzentration im Akzeptormedium 6 ist abhängig von der Diffusionsgeschwindigkeit der Ionen, von der zur Verfügung stehenden Membranfläche, vom Membranmaterial, von der Fliessgeschwindigkeit des Akzeptormediums 6, von der Öffnungsdauer des Absperrorgans 7, etc. In Figur 1 ist die Absperrvorrichtung 7 auf der ersten Membranseite 3 angebracht. Diese kann von einem Mittel zum Bewegen der Absperrvorrichtung 8 zwischen einer Schliessstellung (gezeigt) und einer Offenstellung (nicht gezeigt) mit einem veränderbaren Verhältnis zwischen der Dauer der Öffnungs- und Schliessstellung bewegt werden. Mit der Offenstellung der Absperrvorrichtung 7 wird die zur Verfügung stehende Membranfläche festgelegt. Das Absperrorgan 7 wird in der Regel durch das Mittel 8 bis zu ihrer maximal möglichen Offenstellung betätigt, womit in der Regel die gesamte Fläche der Membran 2 freigegeben ist. Sie ist jedoch auch in solch einer Position fixierbar, dass sie die Membran 2 nur teilweise abdeckt. Die Konzentration des gelösten Stoffes im Akzeptormedium 6 ist abhängig von der Dauer der Schliessstellung bzw. Offenstellung des Absperrorgans pro Zeiteinheit, respektive vom Verhältnis zueinander.

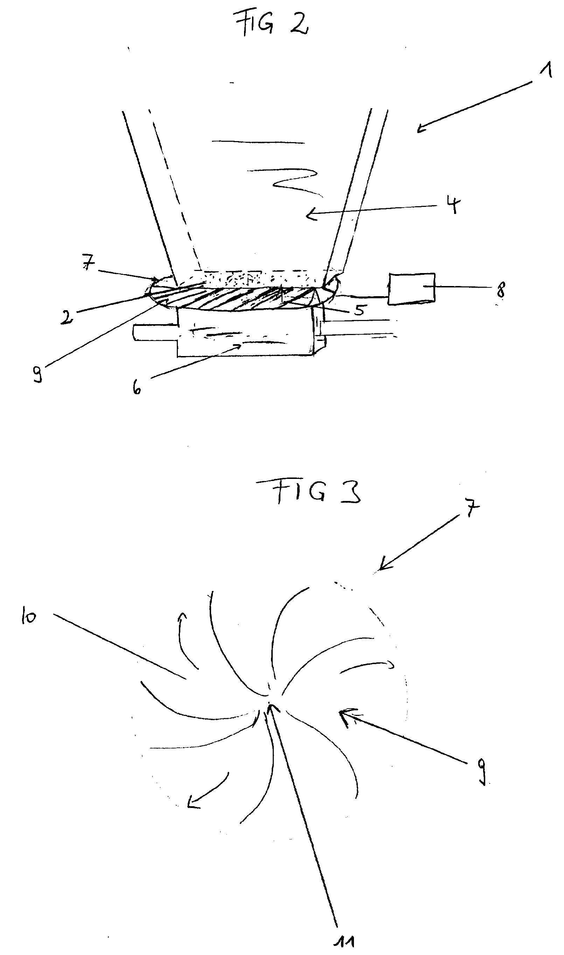

Figur 2 zeigt eine alternative Ausführungsform des erfindungsgemässen RF-Systems 1, in der die Absperrvorrichtung 7 in Form einer Scheibe 9 ausgebildet ist. Die Absperrvorrichtung 7 deckt in der erfindungsgemässen Ausführungsform nach Figur 2 die zweite Membranseite 5 ab. Die eine Hälfte der Scheibe 9 besitzt mindestens eine Öffnung bevorzugt in der Grösse der Austauschfläche der Membran, die andere Hälfte der Scheibe 9 ist geschlossen. Die Einteilung zwischen geschlossenen und offenen Bereichen kann jedoch auch anders ausgebildet sein. Das Mittel zum Bewegen der Absperrvorrichtung 8 veranlasst die Scheibe 9 zur Drehung. Der Wechsel zwischen Schliess- und Offenstellung wird durch Drehen der Scheibe 9 von der offenen auf die geschlossene Seite durchgeführt.

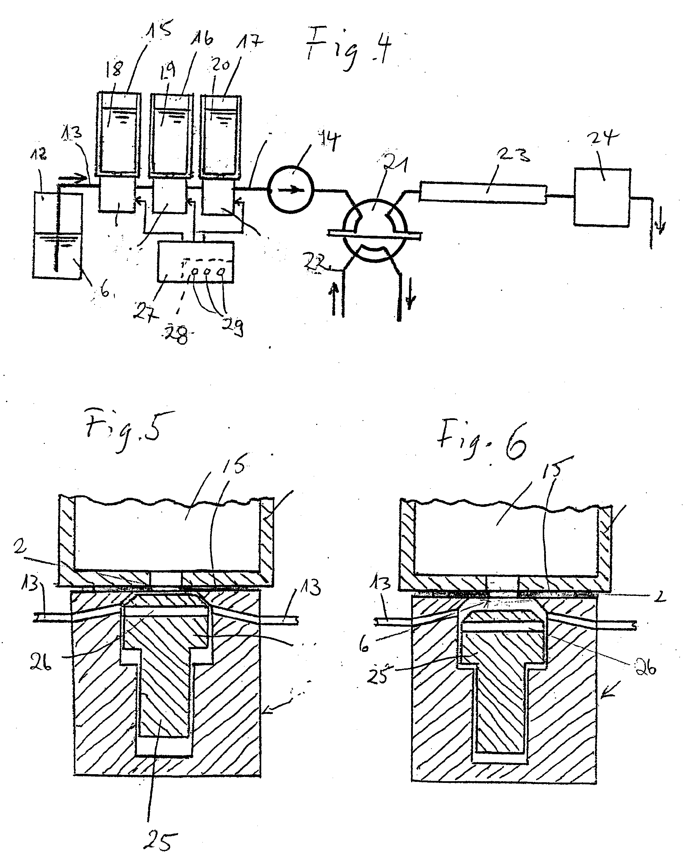

Figur 3 zeigt eine alternative Ausführungsform der Scheibe 9, welche ebenfalls als Absperrvorrichtung 7 in die erfindungsgemässe RF-Systeme 1 integrierbar ist. Der Wechsel zwischen Offen- und Schliessstellung ist durch sich überlappende fächerförmig angeordnete Lamellen 10 durchführbar. Ein Impuls des Mittels zum Bewegen der Absperrvorrichtung 8 veranlasst die Lamellen zur Bewegung in Richtung Mittelpunkt der Scheibe 11 bzw. in die entgegengesetzte Richtung.

In der Regel ist die Absperrvorrichtung 7 als Ventil vom Mittel zum Bewegen der Absperrvorrichtung 8 über Magnetschaltungen steuerbar. Auch hierbei ist durch ein Takten zwischen Offen- und Schliessstellung die Akzeptorkonzentration einstellbar.

In einer Anlage für die Flüssigkeitschromatographie in Fig.4 wird das Akzeptormedium 6 aus einem Vorratsbehälter 12 durch eine Leitung 13 zu einer Pumpe 14 gesaugt. An der Leitung 13 sind drei erfindungsgemässe RF-Systeme 15, 16, 17 für drei unterschiedliche Donatormedien 18, 19, 20, z.B. Natriumcarbonat, Natriumhydrogencarbonat und Natriumhydroxid angeordnet. Aus den Donatormedien 18,19,20 wird die jeweilige freizusetzende Substanz in noch zu beschreibender Weise dem durch die Leitung 13 strömenden Akzeptormedium 6 zugegeben und damit der Eluent generiert. Der Eluent wird von der Pumpe 14 zu einer Probenaufgabeeinrichtung 21, welche in Form eines Mehrwegeventils ausgebildet ist, gefördert. Eine zu analysierende Probe wird der Einrichtung 21 durch eine Leitung 22 zugeführt. Dann wird die Einrichtung 21 in die gezeichnete Stellung gebracht, in welcher der Eluent die Probe in eine Trennsäule 23 spült. Der Trennsäule 23 ist ein Detektor 24 nachgeordnet.

Die Donatormedien 15, 16, 17 stehen mit dem Inneren der Leitung 13 durch jeweils eine Membran hindurch und über ein Absperrorgan welche in Fig. 5 und Fig. 6 vergrössert gezeigt sind in Verbindung.

Figur 5 und 6 zeigen die in den RF-Systemen 15, 16 und 17 realisierte Ausführungsform des Absperrorgans. Dieses ist als Stempel 25 ausgebildet und wird von einer nicht dargestellten Betätigungseinrichtung angetrieben und von einer Offenstellung in eine relativ zur Offenstellung weniger geöffnete Stellung verlagert. Das Akzeptormedium 6 kann durch den Stempel 25 vom Kontakt mit der Membran 2 abgetrennt werden. Figur 5 zeigt die Schliessstellung des Stempels 25, in der der Übergang der freizusetzenden Substanz aus dem Donatormedium 18 in das Akzeptormedium 6 unterbrochen ist. In der Schliesstellung liegt der Stempel 25 mit seiner Stirnseite an der Membran 2 an. Gleichzeitig bildet in dieser Stellung eine im Stempel 25 enthaltene Bohrung 26 einen Abschnitt der Leitung 13, sodass das aus dem Reservoir 12 angesaugte Akzeptormedium 6 ohne Aufnahme freizusetzender Substanz das RF-System 15 passiert. In der Offenstellung in Figur 6 ist der Stempel 25 von der Membran 2 zurückgezogen, sodass das durch die Leitung 13 aus dem Reservoir 12 angesaugte Akzeptormedium 6 mit dem Donatormedium 18 über die Membran 2 in Kontakt treten kann, und damit ein Übergang der freizusetzenden Substanz aus dem Donatormedium 18 in das Akzeptormedium 6 stattfinden kann.

Das Verhältnis der Dauer der Schliessstellung zur Dauer der Offenstellung wird in den Absperrorganen der RF-Systeme 18, 19 und 20 von einer Steuereinheit 27 (Fig. 1) individuell eingestellt bzw. gesteuert. Mit dieser in Figur 4 gezeigten Vorrichtung können auf der einen Seite Akzeptormedien von nur einem RF-System (Stempel der beiden anderen RF-Systeme in Schliess-und Durchflussstellung) aber auch sehr komplexe Akzeptormedien hergestellt werden.

Die Steuereinheit 27 kann eine Computersteuerung 28 enthalten, an der die gewünschten Konzentrationen verschiedener löslicher Stoffe in dem gebildeten Eluenten über Betätigungselemente 29 eingebbar sind und die dann die Steuereinheit veranlasst, die Verhältnisse zwischen Schliessdauer und Offendauer der einzelnen Absperrorgane entsprechend einzustellen.

Das Verhältnis der Dauer zwischen Schliessstellung und Offenstellung kann in der Steuereinheit 27 auch während eines Chromatogramms nach einem Programm zeitabhängig, z.B. für die Gradiententechnik, veränderbar sein.

Im Ausführungsbeispiel sind an der Leitung 13 drei RF-Systeme 15, 16, 17 dargestellt. Natürlich könnten aber an einer Leitung auch weniger oder mehr als drei RF-Systeme, je mit Membran 2 und Absperrorgan 7, angeordnet sein. Ferner ist es auch möglich, zwei oder mehr parallele Leitungen, mit je einem oder mehreren RF-Systemen, zu verwenden, die erst vor der Pumpe 14 in einer Mischkammer zusammengeführt werden (Niederdruckgradient), oder nach getrennten Pumpen vor dem Probeaufgabeventil in einer Mischkammer zusammengeführt werden (Hochdurckgradient).

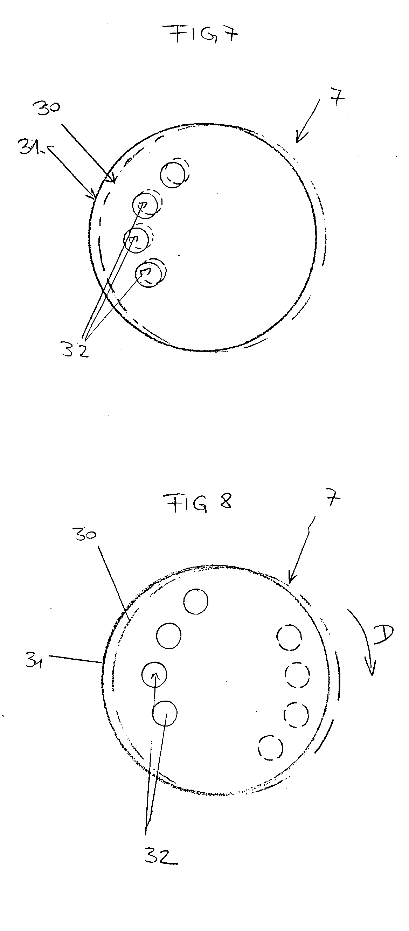

Eine alternative Ausführungsform eines Absperrorgans 7 ist in Figur 7 in Offenstellung und in Figur 8 in Schliessstellung gezeigt. Das Absperrorgan 7 ist in Form eines rotierenden Systems ausgebildet. Die Scheiben 30, 31 können auf einer der beiden Membranseiten 3, 5 angebracht werden. Beide Scheiben 30, 31 werden in einem Kreissegment von kleiner 180°, bevorzugt 120°, mit Löchern 32 versehen. Die Löcher 32 haben einen Durchmesser von mindestens 0,2 mm. Durch Drehen in Richtung D einer der beiden Scheiben, bevorzugt derjenigen die nicht an eine der beiden Membranseiten 3,5 angrenzt, werden die Löcher 32 geschlossen, bis nach einem Drehwinkel von 180° alle Löcher 32 geschlossen sind. Durch Zurückdrehen werden die Löcher 32 wieder geöffnet.

## Patentansprüche

1. Vorrichtung zum Freisetzen von Reagenzien (1), umfassend eine Membran (2), deren erste Seite (3) mit einem Donatormedium (4), enthaltend wenigstens ein Lösemittel, insbesondere wenigstens ein Lösemittel mit wenigstens einem gelösten Stoff, beaufschlagbar ist, und an deren zweiten Seite (5) ein Akzeptormedium (6), enthaltend wenigstens ein Lösemittel, vorbeiführbar ist, wobei insbesondere das Donatormedium (4) in einem zur ersten Membranseite (3) hin offenen Behälter aufnehmbar ist, dadurch gekennzeichnet, dass ein Absperrorgan (7) vorgesehen ist, durch welches wenigstens eine der beiden Membranseiten (3,5) wenigstens partiell vom beaufschlagten Medium (4,6) trennbar ist, und dass das Absperrorgan (7) durch ein Mittel zum Bewegen des Absperrorgans (8) in vorbestimmbaren Intervallen zwischen mindestens einer ersten und mindestens einer zweiten Position betätigbar ist.

2. Vorrichtung gemäss Anspruch 1, dadurch gekennzeichnet, dass die erste Position einer Schliessstellung des Absperrorgans (7) entspricht und die zweite Position einer Offenstellung, wobei das Verhältnis zwischen Dauer der Schliesstellung und Dauer der Offenstellung veränderbar ist.

3. Vorrichtung gemäss Anspruch 1 oder 2, dadurch gekennzeichnet, dass das Absperrorgan (7) über das Mittel zum Bewegen des Absperrorgans (8) ansteuerbar ist.

4. Vorrichtung gemäss einem der Ansprüche 1 bis 3, dadurch gekennzeichnet, dass die Steuerung für das Mittel zum Bewegen des Absperrorgans (8) Teil eines Steuer- oder Regelkreises ist, mit dem ein in seiner Konzentration vorbestimmbares Akzeptormedium (6) herstellbar ist.

5. Vorrichtung nach einem der Ansprüche 1 bis 4, dadurch gekennzeichnet, dass das Absperrorgan (7) einen Stempel (25) enthält, der relativ zur Offenstellung in eine weniger geöffnete Stellung, insbesondere in eine Schliessstellung bewegbar ist, in welcher der Stempel (25) mit einer Stirnseite an der Membran (2) anliegt

6. Vorrichtung gemäss Anspruch 5, dadurch gekennzeichnet, dass der Stempel (25) eine Bohrung (26) enthält, mit welcher in Schliesstellung ein Teil einer Leitung (13) ausbildbar ist.

7. Vorrichtung gemäss einem der Ansprüche 1 bis 4, dadurch gekennzeichnet, dass das Absperrorgan (7) zwei Scheiben (30, 31) mit je wenigstens einer Durchlassöffnung (32) aufweist, und dass die Scheiben (30, 31) relativ zueinander derart verlagerbar sind, dass die Durchlassöffnung (32) wenigstens teilweise fluchtet.

8. Vorrichtung zur Flüssigkeitschromatographie, dadurch gekennzeichnet, dass sie mindestens eine Vorrichtung (1) zur Freisetzung von Reagenzien gemäss einem der Ansprüche 1 bis 7 enthält.

9. Vorrichtung gemäss Anspruch 8, enthaltend wenigstens zwei Vorrichtungen zum Freisetzen von Reagenzien (1) mit wenigstens je einem Absperrorgan (7), dadurch gekennzeichnet, dass die Absperrorgane (7) unabhängig voneinander steuer- und/oder regelbar sind.

10. Vorrichtung nach einem der Ansprüche 8 bis 9, dadurch gekennzeichnet, dass nach mindestens einer der Vorrichtungen zum Freisetzen von Reagenzien (1) eine Mischkammer vorgesehen ist.

11. Verfahren zum Freisetzen von Reagenzien mit einer Vorrichtung zum Freisetzen von Reagenzien (1) umfassend ein Donatormedium (4), welches durch eine Membran (2) von einem Akzeptormedium (6) getrennt ist, wobei
(a) die erste Seite (3) der Membran (2) mit einem Donatormedium (4), enthaltend wenigstens ein Lösemittel, insbesondere wenigstens ein Lösemittel mit wenigstens einem gelösten Stoff, beaufschlagt wird;
(b) an der zweiten Seite (5) der Membran (2) ein Akzeptormedium (6), enthaltend wenigstens ein Lösemittel, vorbeigeführt wird;
(c) wenigstens eine der beiden Membranseiten (3,5) wenigstens partiell durch ein Absperrorgan (7) von einem der beiden Medien (4,6) abgetrennt wird;
(d) das Absperrorgan (7) in vorbestimmbaren Intervallen von einer weiter geöffneten in eine weniger geöffnete Stellung, insbesondere eine Schliessstellung, umgeschaltet wird, um den Austausch zwischen Donator- und Akzeptormedium zeitweise zu reduzieren, insbesondere zu unterbrechen.

12. Verfahren gemäss Anspruch 11, dadurch gekennzeichnet, dass der zu lösende Stoff dem Lösemittel im Donatormedium (4) in einer solchen Menge zugesetzt wird, dass eine nicht gelöste Menge der Substanz als Bodenkörper verbleibt.

13. Verfahren gemäss Anspruch 12, dadurch gekennzeichnet, dass das Donatormedium (4) mittels Quellmittel in einen viskosen Zustand überführt wird, wodurch ein Absetzen der ungelösten Substanz im wesentlichen verhindert wird.

14. Verfahren gemäss Anspruche 11 bis 13, dadurch gekennzeichnet, dass das vorbestimmbare Verhältnis zwischen der weiter geöffneten Offen- und der weniger geöffneten Stellung, insbesondere der Schliessstellung, so eingestellt wird, dass mittels der Diffusionsgeschwindigkeit der freigesetzten Substanz im Akzeptormedium (6) und der Fliessgeschwindigkeit und/oder Turbulenzen des Akzeptormediums (6) eine homogene Verteilung der freigesetzten Substanz im Akzeptormedium (6) erreicht ist.

15. Verfahren zum Erzeugen eines Akzeptormediums (6) in einer Vorrichtung zum Freisetzen von Reagenzien (1), enthaltend eine vorbestimmbare Menge einer aus einem Donatormedium (4) durch eine Membran (2) freigesetzten Substanz, dadurch gekennzeichnet, dass die Menge der Substanz diskontinuierlich in zeitlich vorbestimmbaren Intervallen zwischen wenigstens einer höheren Menge und wenigstens einer niedrigeren Menge so variiert wird, dass die daraus resultierende mittlere Menge der vorbestimmbaren Menge entspricht.
